# FASCICULE DE BREVET EUROPEEN

(11) **EP 2 011 559 B1**
(45) Date de publication et mention de la délivrance du brevet: **25.01.2012**
(21) Numéro de dépôt: 08356097.9
(22) Date de dépôt: 30.06.2008
(51) Int. Cl.: B01D 53/56, B01D 53/86, B01D 53/90, B01D 53/94, F01N 3/20

(54) **Procédé d'épuration de fumées de combustion contenant des oxydes d'azote**
Verfahrung zur Reinigung von Verbrennungsrauchgasen, die Stickoxide enthalten
Method of purifying combustion fumes containing nitrogen oxides

(30) Priorité: 02.07.2007 FR 0704765
(43) Date de publication de la demande: 07.01.2009
(73) Titulaire: LAB SA, 69006 Lyon (FR)
(72) Inventeur: Siret, Bernard, 69200 Venissieux (FR); Tabaries, Franck, 83190 Ollioules (FR)
(74) Mandataire: Schouller, Jean-Philippe

(56) Documents cités:
- EP-A- 0 487 886
- WO-A-98/22209
- US-A1- 2004 098 971

## Description

La présente invention concerne un procédé d'épuration de fumées de combustion contenant des oxydes d'azote.

Lors de la combustion de matières comme le charbon ou le fuel, par exemple, en vue de production d'énergie, ou bien lors de l'incinération de déchets, les fumées issues de la combustion contiennent une proportion appréciable d'oxydes d'azote et ne peuvent être rejetées à l'atmosphère sans traitement.

Pour effectuer cette opération de réduction des oxydes d'azote, dite dénitrification, principalement trois approches sont possibles.

On peut, tout d'abord, agir au niveau de la combustion proprement dite. Des brûleurs dits "bas-Nox" peuvent être utilisés dans le cas de combustion du charbon ou du fuel, ou bien on peut modifier l'excès d'air ou son étagement de façon à ce que, dans les zones très chaudes, la formation des oxydes d'azote, à partir de l'azote de l'air, soit minimisée. Il a également été proposé d'enrichir l'atmosphère de combustion en oxygène ou de recycler du CO₂ pour obtenir cet effet. Dans tous les cas de figure, ces approches sont limitées et, de toutes façons, sont insuffisantes si on veut réduire de plus de 70% la quantité des oxydes d'azote à l'émission.

Une seconde approche consiste à injecter un réactif, usuellement de l'ammoniac ou de l'urée, dans une zone particulière de la combustion. Le réactif se décompose alors et les réactifs générés vont réagir pour empêcher la formation des oxydes d'azote ou détruire ceux déjà formés. Là encore, cette solution connaît des limites et il est difficile de dépasser des rendements de destruction de plus de 70%, sauf à consentir une fuite d'ammoniac dépassant la dizaine de milligrammes par normal-mètre-cube, soit plus que ce qui est requis. Pour les cas où ou on désire une élimination poussée des oxydes d'azote, cette solution, dite SNCR, n'est donc pas appropriée.

La troisième voie possible consiste à faire réagir les oxydes d'azote avec un réactif approprié sur un catalyseur maintenu à température relativement élevée. Cette solution, dite SCR, utilise pour les grosses installations de l'ammoniac ou des solutions ammoniacales, ou bien génère de l'ammoniac par décomposition d'urée dans un réacteur externe et distinct du réacteur catalytique. Pour des applications particulières, d'autres réactifs, comme le propane, peuvent être utilisés. Le catalyseur contient usuellement des oxydes de tungstène W₂O₃ et de Vanadium V₂O₅, quoique d'autres formulations, en particulier contenant du cuivre conviennent. Cette solution, adoptée dans presque tous les cas où une dénitrification poussée est requise, offre entre autres avantages, dans le cas de l'incinération de déchets, de détruire également les dioxines et les furanes.

Toutefois, la quantité d'ammoniac, réactif normalement utilisé, doit être soigneusement adaptée à la composition des fumées et à leur débit. En effet, si on n'injecte pas assez de réactif, on aura une épuration insuffisante alors que, si on injecte trop de réactif, on risque de se retrouver avec une fuite d'ammoniac, c'est-à-dire une situation où l'excès d'ammoniac n'est plus détruit par le catalyseur et où cet ammoniac est présent dans les fumées épurées.

En plus de cet inconvénient, il est connu qu'à l'entrée du catalyseur, l'ammoniac peut réagir avec le dioxyde de soufre également présent dans les fumées d'incinération ou de combustion et former des sels d'ammonium. Ces sels d'ammonium, comme le sulfate ou l'hydrogénosulfate d'ammonium, peuvent se déposer sur le catalyseur et bloquer ou désactiver celui-ci. Enfin, on note des réactions entre l'ammoniac et d'autres sels, comme NaCI ou KCI, qu'on rencontre souvent en incinération. On va alors avoir des réactions de type :

2 NaCl + NH₃ + SO₂ + ½ O₂ → Na₂ SO₄ + 2NH₄Cl

ou 2 KCI + NH₃ + SO₂ + ½ O₂ → K2 SO₄ + 2NH₄Cl

Ces réactions sont gênantes à deux titres : d'abord parce que le chlorure d'ammonium qui se re-forme sur le catalyseur est assez facilement sublimable et se décompose pour libérer NH₃ et HCl, qu'on retrouve à la cheminée. D'autre part, il se produit des réactions de type solide-solide ou bien des changements de phase cristalline qui aggravent les problèmes d'adhérence et d'encrassement du catalyseur. De tels phénomènes, qui conduisent au bouchage des lits de catalyseur et à sa désactivation, sont également rencontrés.

Enfin, les solutions ammoniacales ou l'ammoniac présentent de sérieux problème de sécurité. Il a bien été proposé d'utiliser l'urée comme réactif en lieu et place de l'ammoniac. Par exemple, US 6,805,849 utilise de l'urée mais avec un catalyseur spécial d'oxydation. US 5,281,403 décrit une méthode de conversion et d'injection et place un catalyseur à l'intérieur de la lance d'injection. US 7,090,810 utilise un flux dérivé des fumées à traiter pour faire la conversion. Toutes ces inventions apportent un point de complexité au système et visent à convertir aussi complètement que possible l'urée en ammoniac, eau et gaz carbonique avant le catalyseur principal de la SCR.

Enfin, WO 98/22209 A décrit un procédé d'épuration de fumées de combustion contenant des oxydes d'azote, dans lequel:
- on fait circuler les fumées chaudes à épurer, à une température comprise entre 200 et 270°C,
- on introduit une solution d'urée dans ces fumées chaudes,
- on alimente les fumées, auxquelles a été alimentée cette solution d'urée, à un catalyseur de dénitrification, et
- le temps de séjour des fumées, entre le point d'injection d'urée et le point de mise en contact de ces fumées avec le catalyseur, et/ou la température des fumées entre ces deux points sont réglés afin que de l'acide isocyanique provenant de la décomposition de l'urée soit présent dans ces fumées mises en contact avec le catalyseur et y réagisse avec les oxydes d'azote pour les réduire à l'état d'azote.

Ceci étant précisé, l'invention vise à proposer un procédé qui permet de réduire sensiblement l'apparition de la fuite d'ammoniac, évoquée ci-dessus, tout en limitant substantiellement l'encrassement du catalyseur, dû à la présence des sels comme explicité ci-dessus.

A cet effet, elle a pour objet un procédé d'épuration de fumées de combustion selon la revendication 1 annexée.

Selon une caractéristique avantageuse, le temps de séjour des fumées entre le point d'injection de l'urée et le point de mise en contact des fumées avec le catalyseur est compris entre 0,5 et 3 secondes.

L'invention va être décrite ci-après, en référence aux dessins annexés, donnés uniquement à titre d'exemple non limitatif, dans lesquels :
- la figure 1 est une vue schématique, illustrant une installation d'épuration de fumées permettant la mise en oeuvre du procédé conforme à l'invention ; et
- la figure 2 est un graphe, illustrant différentes réactions intervenant lors de la mise en oeuvre de ce procédé.

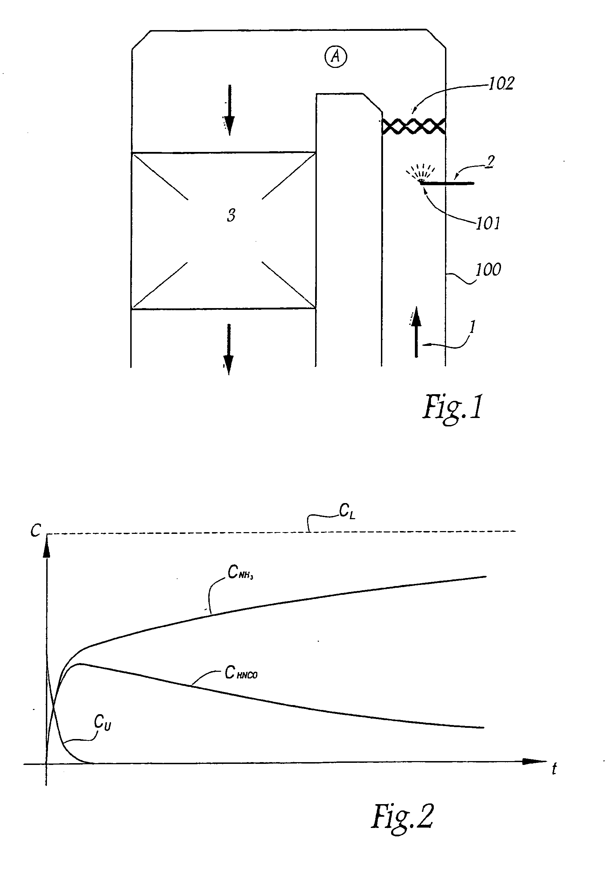

La figure 1, qui représente un arrangement typique de SCR, aide à mieux comprendre l'invention. Les fumées à traiter 1, non encore épurées de leurs oxydes d'azote, sont véhiculées dans une gaine 100, à une température comprise entre 200 et 270°C et, de préférence, entre 220 et 250°C. Une solution d'urée 2 est alimentée à des buses d'atomisation 101, qui sont d'une technologie connue en soi. La solution d'urée, d'une concentration comprise entre 10 et 60%, est alimentée de manière continue et est régulée de façon à obtenir la réduction souhaitée de la concentration en oxyde d'azote.

Au contact des fumées chaudes, la solution 2, atomisée à l'état de fines gouttelettes par les buses 101, est rapidement évaporée. Des mélangeurs statiques 102, d'une technologie connue en soi, homogénéisent le flux gazeux.

Selon le procédé objet de l'invention, une décomposition partielle de l'urée en acide isocyanique et en ammoniac est réalisée dans la zone A, située entre les buses d'injection 101 et un lit de catalyseur 3, de type connu. Comme on va le voir, il s'agit toutefois d'ajuster les paramètres de cette décomposition, afin d'éviter la disparition totale de l'acide isocyanique.

L'invention exploite la décomposition thermique de l'urée en acide isocyanique HN=C=O et en ammoniac NH₃. Selon Ind. Eng. Chem. Res. 2004, 43, 4856-4853, il se produit une première réaction

NH₂ - CO - NH₂ → NH₃ + HNCO (I)

Cette réaction (I), qui se fait thermiquement, sans catalyseur, est une réaction relativement rapide. Dans une seconde étape, on peut avoir une décomposition de l'acide isocyanique formé, toujours thermiquement:

HNCO + H₂O → NH₃ + CO₂ (II)

Cette seconde réaction est beaucoup plus lente que la première, mais l'acide isocyanique HNCO peut aussi être adsorbé par le catalyseur 3 et réagir sur celui ci. La figure 1 annexée montre clairement les deux réactions (I) et (II), dans le cas d'une décomposition purement thermique pour des fumées à 250°C contenant 9% d'eau.

Sur cette figure, on retrouve en abscisses le temps t, et en ordonnées la concentration c des différents composants intervenant dans les réactions (I) et (II) évoquées ci-dessus. Pendant une durée très courte, typiquement voisine de 0,1 seconde, la première réaction se produit, ce qui conduit à la décomposition presque immédiate de l'urée. A cet égard, la courbe Cᵤ indique que la concentration en urée décroît très rapidement pendant cette première phase.

La seconde réaction (II), nettement plus lente, induit une augmentation progressive de la concentration en ammoniac, notée C_{NH3}, ainsi qu'une diminution correspondante de la concentration d'acide isocyanique, notée C_{HNCO}. L'asymptote horizontale indique la concentration limite C_{L} en ammoniac, que l'on pourrait théoriquement atteindre au terme de la réaction (II), à savoir au bout d'un temps très long.

Selon l'invention, on prévoit que, lorsque les fumées arrivent en amont du lit de catalyseur 3, la réaction (II) est incomplète, à savoir que l'acide isocyanique n'est pas totalement transformé en ammoniac. Ceci signifie que, pour une mole d'urée injectée par la buse 101, il reste avantageusement au moins 0,2 mole d'acide isocyanique au niveau du lit de catalyseur 3, acide qui est utilisable pour la réaction de destruction des oxydes d'azote qui va être décrite ci-après.

Cet acide isocyanique, non complètement décomposé, est absorbé dans le catalyseur 3, d'un type connu en soi et contenant, par exemple, des oxydes de tungstène et de vanadium. D'une manière inattendue, cet acide isocyanique se fixe sur le catalyseur et réagit directement sur ce dernier avec les oxydes d'azote, pour les réduire à l'état d'azote selon la réaction ci-après :

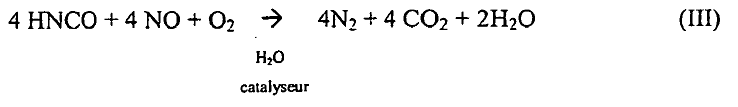

Selon l'invention, cet acide isocyanique réagit au niveau du catalyseur, pour fournir localement le réactif nécessaire à la réduction des oxydes d'azote. Ainsi, la quantité d'ammoniac libre présente immédiatement en amont du lit de catalyseur 3, est nettement inférieure à celle qu'on retrouve dans le cas d'un procédé conventionnel. Ceci présente un double avantage, à savoir tout d'abord réduire sensiblement les fuites d'ammoniac en aval du lit de catalyseur, permettant ainsi d'atteindre des niveaux de NOx beaucoup plus bas sans fuite ammoniac, et en outre limiter l'encrassement du catalyseur.

En effet, il est connu que les sels de type sulfate ou hydrogeno sulfate d'ammonium (NH₄)₂SO₄ ou NH₄HSO₄ sont susceptibles de se déposer en présence de dioxyde de soufre normalement présent. La réduction de la concentration d'ammoniac en amont du catalyseur limite ce dépôt. En outre, on peut retrouver des réactions d'échange avec des sels alcalins pouvant être présents sous forme d'aérosols dans les fumées à épurer, en particulier dans le cas de l'incinération, du type :

2MeCl + 2NH₃ + SO₂ + H₂O + 1/2O₂ → 2NH₄ Cl ↑ + Me₂SO₄

où Me est un Alcalin (K, Na), encrassant le catalyseur et dégradant les émissions à la cheminée car le chlorure d'ammonium NH₄Cl est assez volatil. Or, étant donné que la teneur en ammoniac est réduite grâce à l'invention, ces phénomènes d'encrassement sont également limités.

En conclusion, selon l'invention, on ajuste la température des fumées et/ou leur temps de séjour entre le point 101 d'injection de la solution d'urée 2 et l'amont du lit de catalyseur 3, afin que la réaction (II) de décomposition thermique de l'acide isocyanique soit incomplète. De manière typique, ce temps de séjour est par exemple compris entre 0,5 et 3 secondes.

De plus, dans la zone intermédiaire A, la température est comprise entre 200 et 270° C, de préférence entre 220 et 250° C, ce qui permet un degré de décomposition optimal de l'urée. Comme cela est bien connu de l'homme du métier, si on procède à une augmentation de la température, il s'agit au contraire de réduire le temps de séjour, et inversement.

## Revendications

1. Procédé d'épuration de fumées de combustion (1) contenant des oxydes d'azote, dans lequel :
- on fait circuler les fumées chaudes à épurer, à une température comprise entre 200 et 270° C, de préférence entre 220 et 250° C,
- on introduit une solution d'urée (2) dans ces fumées chaudes,
- on alimente les fumées, auxquelles a été alimentée cette solution d'urée, à un catalyseur de dénitrification (3),
on règle le temps de séjour des fumées, entre le point d'injection d'urée et le point de mise en contact de ces fumées avec le catalyseur, et/ou la température des fumées entre ces deux points, afin que la réaction (II) de destruction, en ammoniac, de l'acide isocyanique provenant de la décomposition (I) de l'urée, où (I) NH₂-CO-NH₂ → NH₃ + HNCO et (II) NHCO + CO-H₂O → NH₃ + CO₂ soit incomplète lors de la mise en contact des fumées avec le catalyseur, de sorte que pour une mole d'urée introduite dans les fumées, au moins 0,2 mole d'acide isocyanique soit présente au niveau du catalyseur, et que l'acide isocyanique ainsi présent dans ces fumées réagisse, en présence du catalyseur, avec les oxydes d'azote pour les réduire à l'état d'azote.

2. Procédé selon la revendication 1, dans lequel le temps de séjour des fumées entre le point d'injection de l'urée et le point de mise en contact des fumées avec le catalyseur est compris entre 0,5 et 3 secondes.

## Claims

1. Method of purifying combustion fumes (1) cotaining nitrogen oxides, in which:
- the hot fumes to be purified are circulated at a temperature comprised between 200 and 270°C, preferably between 220 and 250°C;
- a solution of urea (2) is introduced into these hot fumes;
- the fumes to which this urea solution has been fed is fed to a denitrification catalyst (3);
- the residence time of the fumes between the urea injection point and the contacting point of these fumes with the catalyst, and/or the temperature of the fumes between these two points, is regulated in order that the destruction reaction (II), into ammonia, of the isocyanic acid from the decomposition (I) of the urea
where
(I) NH₂-CO-NH₂ → NH₃ + HNCO
and
(II) HNCO + H₂O → NH₃ + CO₂
is incomplete during the contacting of the fumes with the catalyst, so that for one mole of urea introduced into the fumes, at least 0.2 mole of isocyanic acid is present with respect to the catalyst, and that the isocyanic acid thus present in these fumes reacts, in the presence of the catalyst, with the nitrogen oxides to reduce them to the nitrogen state.

2. Method according to claim 1, in which the residence time of the fumes between the urea injection point and the contacting point of the fumes with the catalyst is comprised between 0.5 and 3 seconds.

## Patentansprüche

1. Verfahren zur Reinigung von Verbrennungsrauchgasen (1), die stickoxide enthalten, bei dem:
- man die heißen zu reinigenden Rauchgase bei einer Temperatur zwischen 200 und 270°C, vorzugsweise zwischen 220 und 250°C zirkulieren lässt,
- man eine Harnstofflösung (2) in diese heißen Rauchgase einführt,
- man die Rauchgase, die mit dieser Harnstofflösung beaufschlagt werden, einem Denitrifikationsreaktor (3) zuführt,
- man die Haltezeit der Rauchgase zwischen dem Punkt der Beaufschlagung des Harnstoffs und dem Punkt des Inkontaktbringens dieser Rauchgase mit dem Katalysator und/oder die Temperatur der Rauchgase zwischen diesen zwei Punkten einstellt, damit die Zerstörungsreaktion (II) der Isocyansäurezu Ammoniak, die von der Zerlegung (I) des Harnstoffs herrührt, während dem Inkontaktbringen der Rauchgase mit dem katalysator unvollständig ist,
wobei
(I) NH₂ - CO - NH₂ → NH₃ + HNCO
und
(II) HNCO + H₂O → NH₃ + CO₂,
derart, dass für ein in die Rauchgase eingeführtes Mol Harnstoff, mindestens 0,2 Mol Isocyansäure in Bezug auf den Katalysator vorhanden ist, und die so in diesen Rauchgasen vorhandene Isocyansäure in Anwesenheit des Katalysators mit den Stickoxiden reagiert, um diese in de zustand Stickstoff zu reduzieren.

2. Verfahren nach Anspruch 1, bei dem die Haltezeit der Rauchgase zwischen dem Punkt der Beaufschlagung des Harnstoffs und dem Punkt des Inkontaktbringens der Rauchgase mit dem Katalysator zwischen 0,5 und 3 Sekunden liegt.
